# EUROPEAN PATENT APPLICATION

(11) **EP 2 252 107 A2**
(43) Date of publication of application: **17.11.2010**
(21) Application number: 10250899.1
(22) Date of filing: 10.05.2010
(51) Int. Cl.: H04W 36/22

(54) **Method for improving cell load balance in cellular network and associated user equipment**

(30) Priority: 15.05.2009 US 178501 P
(71) Applicant: HTC Corporation, Taoyuan County 330 (TW)
(72) Inventor: Chen, Te-Ming, Taoyuan City Taoyuan county 330 (TW); Jen, Yu-Chih, Taoyuan City Taoyuan County 330 (TW)
(74) Representative: Wallin, Nicholas James

(57) **Abstract**

A method for improving cell load balance in a cellular network and an associated user equipment (UE) are provided to improve cell load balance of the cellular network in a more flexible and effective manner. The method is used in the UE, and comprises receiving a first priority set and a second priority set from the cellular network and applying one of the first and second priority sets when selecting a new serving cell from the cellular network. Each of the first and second priority sets assigns a selecting priority to at least one carrier frequency or radio access frequency of the cellular network.

## Description

### BACKGROUND OF INVENTION

### 1. FIELD OF THE INVENTION

The present invention relates to cellular networks, and more particularly to a method for improving cell load balance in the cellular network and an associated user equipment.

### 2. DESCRIPTION OF THE PRIOR ART

In a Universal Mobile Telecommunications System (UMTS) network or Long Term Evolution (LTE) network, when a cell is overloaded or heavily loaded, the network can try to alleviate the load of the cell by directing user equipments (UE) served by the cell to another less loaded cell, so as to improving cell load balance. There are several conventional approaches to direct the UE away from its current serving cell:
(1) The network can change a set of priorities of different carrier frequencies or Radio Access Technologies (RAT) provided in system information broadcasted to the UE. In the UMTS or LTE network, the UE in an idle mode performs cell selection and reselection to select a serving cell to camp on, and the network will provide the above set of priorities to the UE via the broadcasted system information such that the UE can select the serving cell based thereon. Thus, if the set of priorities is changed, the UE will select another serving cell at another carrier frequency or RAT accordingly.
(2) The network can provide a redirect information or dedicated priorities of different carrier frequencies or RATs to the UE by a radio resource control (RRC) connection release message when the UE leaves a connected mode to the idle mode, such that the UE can select a new serving cell at another carrier frequency or RAT according to the redirect information or the dedicated priorities.
(3) The network can direct the UE in the connected mode to another serving cell when the connected mode UE needs a handover.

However, there are several issues encountered in the above-mentioned approaches. The first issue is that these approaches cannot improve cell load balance effectively. Regarding the approach (1), the set of priorities provided in the system information can only direct the UE to select a cell at a different frequency or RAT. If the network changes the set of priorities in the system information, all the idle mode UEs in an overloaded cell may change to another cell at a different frequency or RAT since the system information is broadcasted to all the UEs in the same cell. Thus, this may cause another cell to be overloaded and fail to improve cell load balance. Regarding the approaches (2) and (3), the network can direct a UE away only when the UE is leaving the connected mode or needs a handover. Since the network can not control at what time the UE will leave the connected mode or need a handover, the approaches (2) and (3) may not direct enough UEs away to significantly reduce the load of an overloaded or heavily loaded cell in time, especially when one or more UEs want to make a connection with the network via this overloaded or heavily loaded cell. Besides, the approach (3) is even more undesirable since it brings more signaling load on the cell to worsen the overloaded or heavily loaded situation.

The second issue is related to the approach (2). When the network sends the RRC connection release message to direct the UE away f rom the current serving cell (i.e. the last connected cell of the UE in the connected mode), the network may want to direct the UE to another cell at the same frequency as the current serving cell due to practical reasons, e.g. the UE requests a service only available at this frequency, or other frequencies or RATs are just not available. However, the approach (2) can only direct the UE to a new serving cell at another carrier frequency or RAT.

### SUMMARY OF INVENTION

It is therefore one objective of the present invention to provide a method for improving cell load balance in a cellular network and an associated user equipment (UE), thereby improving cell load balance in a more flexible and effective manner.

In one embodiment of the present invention, a method used in a UE for improving cell load balance in a cellular network is provided. The method comprises: receiving a first priority set and a second priority set from the cellular network, wherein each of the first and second priority sets assigns a selecting priority to at least one carrier frequency or RAT of the cellular network; and applying one of the first and second priority sets when selecting a new serving cell for the UE from the cellular network.

In another embodiment of the present invention, a method used in a UE for improving cell load balance in a cellular network is provided. The method comprises: receiving a lowering request from the cellular network; lowering a selecting priority of a serving cell of the UE according to the lowering request; and selecting a new serving cell for the UE from the cellular network according to the lowered selecting priority of the serving cell.

In another embodiment of the present invention, a method used in a UE for improving cell load balance in a cellular network is provided. The method comprises: receiving a barring request from the cellular network; barring a serving cell of the UE according to the barring request; and selecting a new serving cell for the UE from the cellular network to replace the barred serving cell.

In another embodiment of the present invention, a UE for improving cell load balance in a cellular network is provided. The UE comprises: a receiving means for receiving a first priority set and a second priority set from the cellular network, wherein each of the first and second priority sets assigns a selecting priority to at least one carrier frequency or RAT of the cellular network; and a selecting means for applying one of the first and second priority sets to select a new serving cell for the UE from the cellular network.

In another embodiment of the present invention, a UE for improving cell load balance in a cellular network is provided. The UE comprises: a receiving means for receiving a lowering request from the cellular network; a lowering means for lowering a selecting priority of a serving cell of the UE according to the lowering request; and a selecting means for selecting a new serving cell for the UE from the cellular network according to the lowered selecting priority of the serving cell.

In another embodiment of the present invention, a UE for improving cell load balance in a cellular network is provided. The UE comprises: a receiving means for receiving a barring request from the cellular network; a barring means for barring a serving cell of the UE according to the barring request; and a selecting means for selecting a new serving cell for the UE from the cellular network to replace the barred serving cell.

### BRIEF DESCRIPTION OF THE DRAWINGS

Fig.1 is a flow chart of a method for improving cell load balance in a cellular network according to the first embodiment of the present invention.
Fig.2 is a flow chart of the method for improving cell load balance in the cellular network according to the second embodiment of the present invention.
Fig.3 is a flow chart of the method for improving cell load balance in the cellular network according to the third embodiment of the present invention.
Fig.4 shows a block diagram of an embodiment of a user equipment implementing the method in Fig.1 according to the present invention.
Fig.5 shows a block diagram of another embodiment of the user equipment implementing the method in Fig.2 according to the present invention.
Fig.6 shows a block diagram of another embodiment of the user equipment implementing the method in Fig.3 according to the present invention.

### DETAILED DESCRIPTION

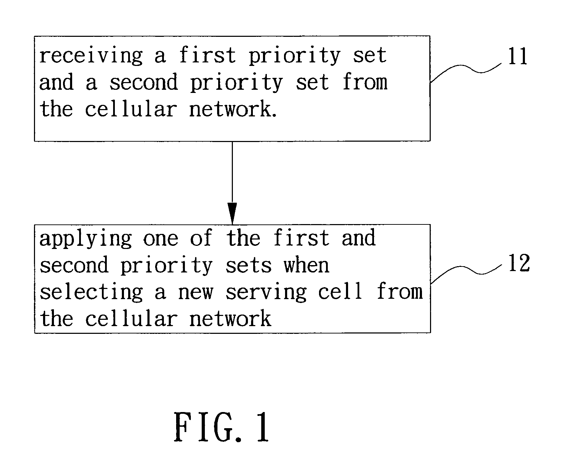

Reference will now to be made in detail to embodiments of the present invention, which are illustrated in the accompanying drawings. Fig.1 is a flow chart of a method for improving cell load balance in a cellular network according to the first embodiment of the present invention. The cellular network can be, but not limited to, a UMTS network or a LTE network (e.g. LTE-Advanced network). The method is used in a user equipment (UE) of the cellular network. When the current serving cell of the UE is overloaded or heavily loaded, the method can be applied to direct the UE to select or reselect another less loaded serving cell, thereby reducing the load of the current serving cell and thus achieving more balanced cell load.

In step 11, the UE receives a first priority set and a second priority set from the cellular network. Each of the first and second priority sets assigns a selecting priority to at least one carrier frequency or radio access technology (RAT) of the cellular network. The first and second priority sets are used by the UE to select a serving cell. The network provides the first and second priority sets to the UE by including them in a system information broadcasted to the UE. It should be noted that one major difference between the first embodiment and the prior arts is that the first embodiment provides two priority sets while the prior arts only provides one.

In step 12, the UE applies one of the first and second priority sets when selecting (or reselecting) a new serving cell from the cellular network. In the UMTS or LTE network, the UE in an idle mode regularly performs cell reselection to select the new serving cell, while the UE leaving a connected mode to the idle mode performs cell selection to select the new serving cell. The idle mode UE performs the cell reselection according to one of the first and second priority sets. For the UE leaving the connected mode to the idle mode, if it receives dedicated priorities assigned by a state transition message (e.g. RRC connection release message) for the at least one carrier frequency or RAT of the network, then the cell selection is performed according to the dedicated priorities; if not, then the cell selection is performed according to one of the first and second priority sets. There are two ways to execute step 12:
(1) When selecting the new serving cell, the UE applies the first priority set firstly. If the new serving cell selected according to the first priority set is overloaded or heavily loaded, then the UE applies the second priority set instead to select another serving cell.
(2) If the UE receives from the network a first request message for instructing the UE to apply the second priority set, then the UE applies the second priority set to select the new serving cell; if no first request message is received, the UE applies the first priority set. The first request message can be identified by a corresponding radio network temporary identifier (RNTI).

Preferably, the first request message is a paging message, which can comprises an indicator (e.g. one-bit value) for instructing the UE to apply the second priority set. In the first embodiment, all the UEs served by a cell are divided into a plurality of paging groups. For example, this division can be performed according to the UE identification so as to keep the UEs in the serving cell uniformly distributed on the paging groups. The network can selectively send the paging message to one or more of the paging groups in the serving cell. In this manner, the network can direct the UEs of certain paging groups to use the second priority set, while the UEs in the other paging groups without receiving the paging message use the first priority set. If the first and second priority sets are configured in such a way that the selecting priority of the carrier frequency or RAT of the current serving cell is highest in the first priority set and not highest in the second priority set, then the network can direct a part of the UEs, which receives the paging message, away from the current serving cell since these UEs will select another serving cell at a different frequency or RAT according to the second priority set.

As mentioned earlier, the network can provide the first and second priority sets to the UE by including them in the system information broadcasted to the UE. But when step 12 is executed via the first request message (e.g. the paging message), an alternative implementation for providing the first and second priority sets is available, that is, the first priority set is included in the system information, while the second priority set is included in the first request message.

The first embodiment can solve the first issue of the prior arts mentioned above. That is, by providing two different priority sets to the UE for use to selecting a new serving cell, all the idle mode UEs in the current serving cell will not select the same cell if the current serving cell is overloaded or heavily loaded.

Preferably, the UE starts a first timer when the UE applies the second priority set in response to the received first request message. The first timer will be stopped when one of the following situations occurs: the new serving cell is selected, the UE enters the connected mode, and the UE selects a new cellular network (e.g. the UE changes to another public land mobile network (PLMN)). When the first timer is stopped or expired, the UE applies the first priority set instead to select the new serving cell. That is, the second priority set can be considered as an auxiliary to the first priority so as to keep the serving cell from entering or staying at an overloaded or heavily loaded status, and the first timer is used to control the length of valid time for the second priority set. The UE can acquire the start value of the first timer from one of the following: the first request message (e.g. the paging message), the system information received from the network, and a storage element of the UE (i.e. the storage element pre-stores the start value of the first timer).

The first embodiment can be extended to the case where three or more priority sets are provided. Then, step 11 can be adjusted as that the UE receives the three or more priority sets from the network; step 12 can be adjusted as that the UE applies one of the three or more priority sets when selecting a new serving cell from the network. Similarly, there are also two ways to execute the adjusted step 12:
(1) When selecting the new serving cell, the UE applies each of the three or more priority sets one after one until one qualified new serving cell (i.e. not overloaded or heavily loaded) is selected.
(2) The UE can receive from the network a paging message for instructing the UE to apply an assigned one of three or more priority sets to select the new serving cell. The paging message can comprises a field for showing which priority set is assigned. Different paging groups may respectively receive the paging messages for assigning different priority sets, so as to direct the idle mode UEs in the different paging groups to the serving cells at different frequencies or RATs. This approach can provide a more flexible way to improve cell load balance.

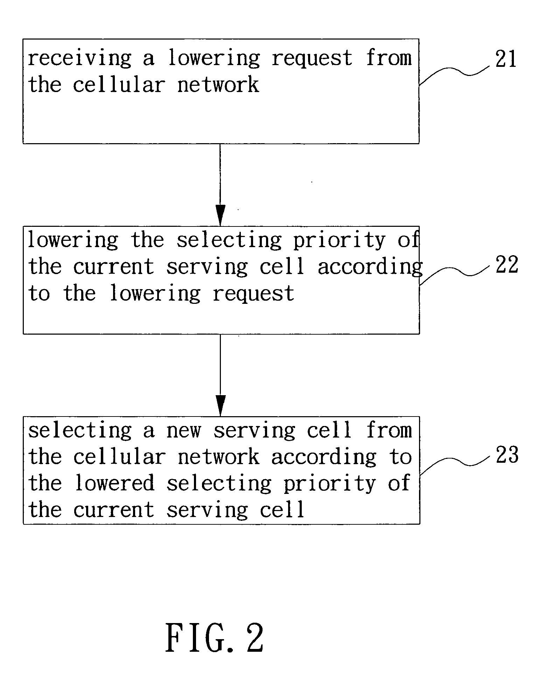

Fig.2 is a flow chart of the method for improving cell load balance in the cellular network according to the second embodiment of the present invention. In the second embodiment, the selecting priority of the current serving cell of the UE is lowered. Thus, when the UE is to select a new serving cell (e.g. when the UE is in the idle mode and performs the cell reselection, or when the UE leaves the connected mode to the idle mode and performs the cell selection), it is less possible to select the current serving cell. The lower the selecting priority of the current serving cell is changed, the less possible the current serving cell is selected again.

In step 21, the UE receives a lowering request from the network. The lowering request is for requesting the UE to lower the selecting priority of the current serving cell, and can be sent by the network to the UE when the current serving cell is overloaded or heavily loaded. In step 22, the UE lowers the selecting priority of the current serving cell according to the lowering request. In step 23, the UE selects (or reselects) a new serving cell from the network according to the lowered selecting priority of the current serving cell.

There are two ways for the network to send the lowering request:
(1) The network sends a second request message including the lowering request to the UE. The second request message can be identified by a corresponding RNTI. In the second request message, the lowering request can be configured as a field to contain an instruction of lowering the selecting priority and a target priority level which the selecting priority should be lowered to. The target priority level can be represented, but not limited to, by a specific value. For example, if there are eight priority levels represented as integers 0∼7, where 0 is the lowest and 7 is the highest, then the target priority level may be any integer of 0∼6 when the current selecting priority is 7.
   Preferably, the second request message is a paging message. In the second embodiment, similarly as the first embodiment, all the UEs in the serving cell are divided into plural paging groups. Thus, the network can selectively send the paging message to one (or more) of the paging groups in the serving cell, so as to urge the idle mode UEs in this (or these) paging group(s) to select another serving cell. In this manner, parts of UEs can be directed away from the current serving cell, thereby improving cell load balance if the current serving cell is overloaded or heavily loaded.
(2) The network sends a state transition message including the lowering request to the UE when the UE is to leave the connected mode to the idle mode. In the UMTS or LTE network, the state transition message can be a radio resource control (RRC) connection release message. When leaving the connected mode to the idle mode, the UE tends to select another serving cell since the selecting priority of the current serving cell (i.e. the last connected cell of the UE) is lowered in response to the lowering request included in the state transition message. It should be noted that what the UE lowers is the selecting priority of the current serving cell, not that of the frequency or RAT of the current serving cell. Thus, the UE can still select another serving cell at the same frequency and RAT as the current serving cell, and thus the second issue of the prior arts can be solved.

Preferably, the UE starts a second timer when the UE lowers the selecting priority of the current serving cell in response to the received lowering request. The second timer can be stopped when one of the following situations occurs: the new serving cell is selected, the UE enters the connected mode, and the UE selects a new cellular network. When the second timer is stopped or expired, the UE restores the selecting priority of the serving cell which is previously lowered. That is, the second timer is used to control the length of valid time for the lowered selecting priority. The UE can acquire the start value of the second timer from one of the following: the lowering request, the system information received from the network, and or a storage element of the UE (i.e. the storage element pre-stores the start value of the second timer).

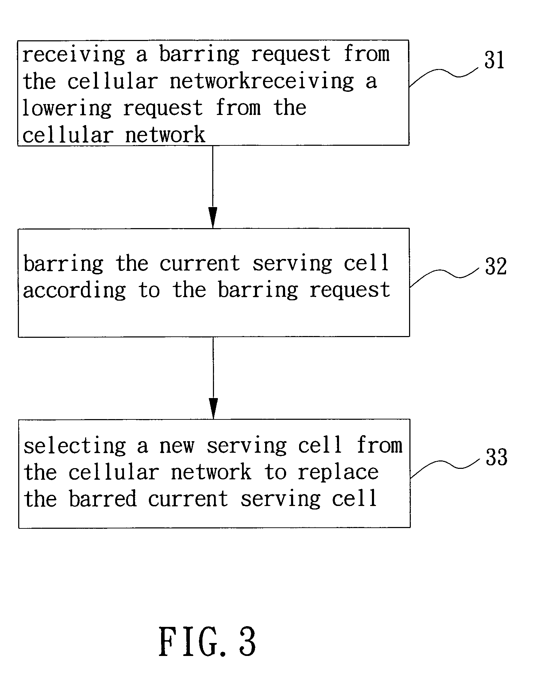

Fig.3 is a flow chart of the method for improving cell load balance in the cellular network according to the third embodiment of the present invention. In the third embodiment, the current serving cell of the UE is barred. Thus, when the UE is to select a new serving cell (e.g. when the UE is in the idle mode and performs the cell reselection, or when the UE leaves the connected mode to the idle mode and performs the cell selection), the UE will be forced to select another serving cell since the current serving cell is forbidden to select.

In step 31, the UE receives a barring request from the network. The barring request is for requesting the UE to bar the current serving cell, and can be sent by the network to the UE when the current serving cell is overloaded or heavily loaded. In step 32, the UE bars the current serving cell according to the barring request. In step 33, the UE selects a new serving cell from the network to replace the barred current serving cell.

There are two ways for the network to send the barring request:
(1) The network sends a third request message including the barring request to the UE. The third request message can be identified by a corresponding RNTI. In the third request message, the barring request can be configured as an indicator (e.g. one-bit value). Preferably, the third request message is a paging message. In the third embodiment, similarly as the first embodiment, all the UEs in the serving cell are divided into plural paging groups. Thus, the network can selectively send the paging message to one (or more) of the paging groups in the serving cell, so as to force the idle mode UEs in this (or these) paging group(s) to select another serving cell. In this manner, parts of UEs can be directed away from the current serving cell, thereby improving cell load balance if the current serving cell is overloaded or heavily loaded.
(2) The network sends a state transition message including the barring request to the UE when the UE is to leave the connected mode to the idle mode. In the UMTS or LTE network, the state transition message can be a RRC connection release message. When leaving the connected mode to the idle mode, the UE selects another serving cell since the current serving cell (i.e. the last connected cell of the UE) is barred in response to the barring request included in the state transition message. It should be noted that the UE can still select another serving cell at the same frequency and RAT as the current serving cell, and thus the second issue of the prior arts can be solved.

Preferably, the UE starts a third timer when the UE bars the current serving cell in response to the received barring request. The third timer can be stopped when one of the following situations occurs: the new serving cell is selected, the UE enters the connected mode, and the UE selects a new cellular network. When the third timer is stopped or expired, the UE restores the barred serving cell as not barred. That is, the third timer is used to control the length of time for barring the current serving cell. The UE can acquire the start value of the third timer from one of the following: the barring request, the system information received from the network, and a storage element of the UE (i.e. the storage element pre-stores the start value of the third timer).

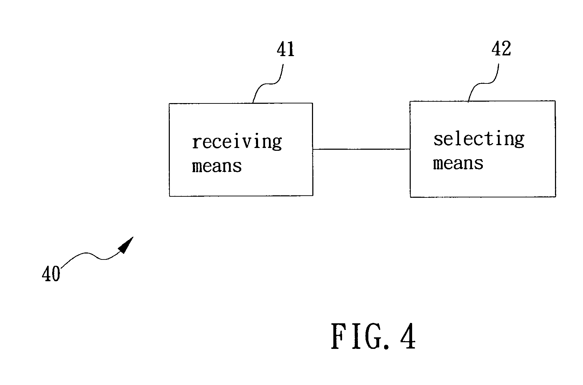

Fig.4 shows a block diagram of an embodiment of a user equipment (UE) implementing the method in Fig.1 according to the present invention. As shown in Fig.4, the UE 40 comprises a receiving means 41 and a selecting means 42. The receiving means 41 is for receiving the first and second priority sets from the network, and the selecting means 42 is for applying one of the first and second priority sets to select the new serving cell from the network.

The selecting means 42 selects the new serving cell in two ways:
(1) When selecting the new serving cell, the selecting means 42 applies the first priority set firstly. If the new serving cell selected according to the first priority set is overloaded or heavily loaded, then the selecting means 42 applies the second priority set instead to select another serving cell.
(2) If the receiving means 41 receives from the network the first request message as described above, then the selecting means 42 applies the second priority set to select the new serving cell; if no first request message is received, the selecting means 42 applies the first priority set. Preferably, the first request message is the paging message as described above.

Preferably, the UE 40 further includes the first timer as described above (not shown in Fig.4). The selecting means 42 starts the first timer when the selecting means 42 applies the second priority set in response to the received first request message. The selecting means 42 stops the first timer when one of the following situations occurs: the new serving cell is selected, the UE 40 enters the connected mode, and the UE 40 selects a new cellular network. When the first timer is stopped or expired, the selecting means 42 applies the first priority set instead to select the new serving cell. The selecting means 42 can acquire the start value of the first timer from one of the following: the first request message (e.g. the paging message), the system information received by the receiving means 41 from the network, and a storage element of the UE 40 (not shown in Fig.4).

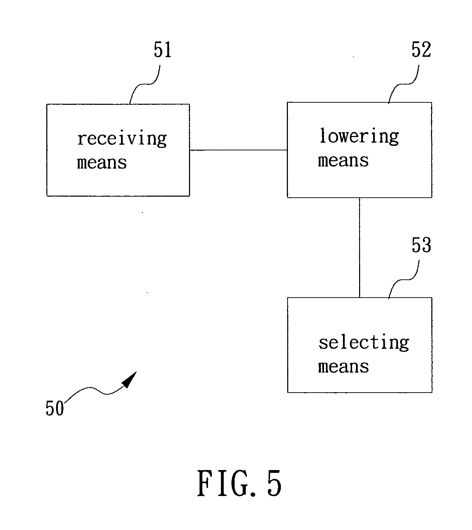

Fig.5 shows a block diagram of another embodiment of the UE implementing the method in Fig.2 according to the present invention. As shown in Fig.5, the UE 50 comprises a receiving means 51, a lowering means 52 and a selecting means 53. The receiving means 51 is for receiving from the network the lowering request as described above. The lowering means 52 is for lowering the selecting priority of the current serving cell of the UE 50 according to the lowering request. The selecting means 53 is for selecting the new serving cell from the network according to the lowered selecting priority of the current serving cell.

Preferably, the UE 50 further includes the second timer as described above (not shown in Fig.5). The lowering means 52 starts the second timer when the selecting priority of the current serving cell is lowered in response to the received lowering request. The lowering means 52 stops the second timer when one of the following situations occurs: the new serving cell is selected, the UE 50 enters the connected mode, and the UE 50 selects a new cellular network. When the second timer is stopped or expired, the lowering means 52 restores the selecting priority of the serving cell which is previously lowered. The lowering means 52 can acquire the start value of the second timer from one of the following: the lowering request, the system information received by the receiving means 51 from the network, and a storage element of the UE 50 (not shown in Fig.5).

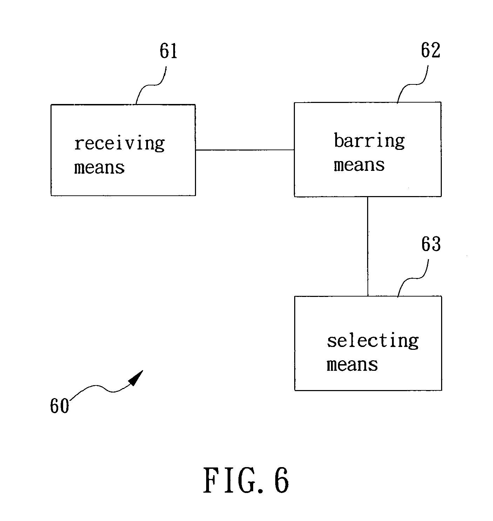

Fig.6 shows a block diagram of another embodiment of the UE implementing the method in Fig.3 according to the present invention. As shown in Fig.6, the UE 60 comprises a receiving means 61, a barring means 62 and a selecting means 63. The receiving means 61 is for receiving from the network the barring request as described above. The barring means 62 is for barring the current serving cell of the UE 60 according to the barring request. The selecting means 63 is for selecting the new serving cell from the network to replace the barred current serving cell.

Preferably, the UE 60 further includes the third timer as described above (not shown in Fig.6). The barring means 62 starts the third timer when the current serving cell is barred in response to the received barring request. The barring means 62 stops the third timer when one of the following situations occurs: the new serving cell is selected, the UE 60 enters the connected mode, and the UE 60 selects a new cellular network. When the third timer is stopped or expired, the barring means 62 restores the barred serving cell as not barred. The barring means 62 can acquire the start value of the third timer from one of the following: the barring request, the system information received by the receiving means 61 from the network, and a storage element of the UE 60 (not shown in Fig.5).

Please note that all of the receiving means, the selecting means, the lowering means and the barring means mentioned above can be realized by hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (SIP), or computer on module (COM).

While the present invention has been shown and described with reference to the preferred embodiments thereof and the illustrative drawings, it should not be considered as limited thereby. Various possible modifications and alterations can be conceived by persons skilled without departing from the scope and the spirit of the present invention.

## Claims

1. A method used in a user equipment (UE) for improving cell load balance in a cellular network comprising:
receiving a first priority set and a second priority set from the cellular network, wherein each of the first and second priority sets assigns a selecting priority to at least one carrier frequency or radio access technology of the cellular network; and
applying one of the first and second priority sets when selecting a new serving cell for the UE from the cellular network.

2. The method of claim 1, wherein the first and second priority sets are included in a system information received by the UE from the cellular network.

3. The method of claim 1, wherein the applying step comprises:
applying the second priority set rather than the first priority set to select the new serving cell when a current serving cell of the UE is overloaded or heavily loaded.

4. The method of claim 1, wherein the applying step comprises:
applying the second priority set to select the new serving cell after the UE receives from the cellular network a paging message for instructing the UE to apply the second priority set.

5. The method of claim 4, wherein the first priority set is included in a system information received by the UE from the cellular network, and the second priority set is included in the paging message.

6. The method of claim 4, wherein the UE starts a timer when the UE applies the second priority set to select the new serving cell, wherein the timer is stopped when the new serving cell is selected or when the UE enters a connected mode or when the UE selects a new cellular network.

7. The method of claim 6, wherein when the timer is stopped or expired, the UE applies the first priority set rather than the second priority set to select the new serving cell.

8. A method used in a user equipment (UE) for improving cell load balance in a cellular network comprising:
receiving a lowering request from the cellular network;
lowering a selecting priority of a serving cell of the UE according to the lowering request; and
selecting a new serving cell for the UE from the cellular network according to the lowered selecting priority of the serving cell.

9. The method of claim 8, wherein the lowering request is included in a paging message received by the UE from the cellular network.

10. The method of claim 8, wherein the lowering request is included in a state transition message received from the cellular network when the UE leaves a connected mode to an idle mode.

11. The method of claim 8, wherein the UE starts a timer when the UE lowers the selecting priority of the serving cell, wherein the timer is stopped when the new serving cell is selected or when the UE enters a connected mode or when the UE selects a new cellular network.

12. The method of claim 11, wherein when the timer is stopped or expired, the UE restores the selecting priority of the serving cell.

13. A method used in a user equipment (UE) for improving cell load balance in a cellular network comprising:
receiving a barring request from the cellular network;
barring a serving cell of the UE according to the barring request; and
selecting a new serving cell for the UE from the cellular network to replace the barred serving cell.

14. The method of claim 13, wherein the barring request is included in a paging message received by the UE from the cellular network.

15. The method of claim 13, wherein the barring request is included in a state transition message received from the cellular network when the UE leaves a connected mode to an idle mode.
